# EUROPÄISCHE PATENTANMELDUNG

(11) **EP 2 333 681 A2**
(43) Veröffentlichungstag der Anmeldung: **15.06.2011**
(21) Anmeldenummer: 10014336.1
(22) Anmeldetag: 05.11.2010
(51) Int. Cl.: G06F 17/50

(54) **Computerimplementiertes Verfahren zum Erstellen einer technischen Zeichnung**

(30) Priorität: 12.11.2009 DE 102009052903
(71) Anmelder: CARAT Gesellschaft für Organisation und Softwareentwicklung mbH, 63303 Dreieich (DE)
(72) Erfinder: Essig, Gerhard, 63322 Rödermark (DE)
(74) Vertreter: Erb, Henning

(57) **Zusammenfassung**

Ein computerimplementiertes Verfahren dient zum Erstellen einer technischen Zeichnung für die Küchenplanung. Zur Verfügung stehende Küchenelemente sind als Datensätze mit ihren Grundabmessungen in einem Datenspeicher hinterlegt und werden nach ihrer Selektion in die technische Zeichnung eingefügt. Um das langwierige Heraussuchen betreffender Artikelnummern mit Hilfe von Papierkatalogen zu vermeiden, wird vorgeschlagen, dass in einer ersten Filterebene (1) die Datensätze nach einer gewählten Planungsebene und einem gewählten Rastermaß selektiert werden und betreffende Datensätze als Artikelliste (4) zur Selektion eines bestimmten Artikels durch den Benutzer angezeigt werden.

## Beschreibung

Die vorliegende Erfindung befasst sich mit einem computerimplementierten Verfahren zum Erstellen einer technischen Zeichnung für die Küchenplanung, wobei zur Verfügung stehende Küchenelemente als Datensätze mit ihren Grundabmessungen in einem Datenspeicher hinterlegt werden und nach der Selektion eines Datensatzes des entsprechenden Küchenelementes dieses in die technische Zeichnung eingefügt wird.

Für die Planung von Küchen existieren bereits eine Vielzahl den Planer unterstützende Computerprogramme, die nach Anklicken der Artikelnummer eines bestimmten Küchenelements, wie beispielsweise eines Holzelements, eines Elektroeinbaugerätes, einer Spüle oder eines sonstigen Artikels in eine technische Zeichnung implementiert werden, die dann die Planungsgrundlage für den Verkauf und die Bestellung sowie die Montageanleitung darstellt.

Erschwerend hierbei ist, dass für die Ausgestaltung einer Küche mit Küchenelementen wie Holzelementen, Elektroartikeln, Spülenartikeln und Sonderartikeln dem Planer ca. 3.000.000 Artikel zur Verfügung stehen, die in ca. 1.000 Herstellerkatalogen hinterlegt sind. Zwar existieren bereits auch Programme, in denen die Datensätze für einen Großteil dieser Elemente hinterlegt sind, allerdings ist es für den Planer nicht möglich, die notwendigen Artikelbezeichnungen aus dem Kopf heraus in das Programm zur Zeichnungserstellung einzugeben. Selbst wenn sich ein Planer auf ca. 15 bis 20 Hersteller konzentriert, bedeutete dies immer noch einen Artikelstamm von 50.000 Artikeln. Bei der Planung muss der Planer damit trotz der Unterstützung durch das Computerprogramm sich die Papierkataloge zur Hand nehmen, die nach der Ordnungsstruktur "Artikelgruppe - Artikelcharakteristik - Artikelmaße" geordnet sind. Dies ist für den Aufbau von Papierkatalogen zweckmäßig, da der Kunde sich meist zunächst für ein bestimmtes Modell eines bestimmten Herstellers entscheidet. Bei der Planung werden dann nach und nach bestimmte gewünschte Elemente nachgeschlagen und dann über die Maße die betreffende Artikelnummer manuell herausgesucht, um sie in das Planungsprogramm einzugeben. Ein anderer Aufbau ist bei Papierkatalogen nicht sinnvoll und würde die Suche noch weiter erschweren und den Umfang der Papierkataloge in einem nicht mehr zu handhabenden Ausmaß vergrößern. Andererseits ist durch die reine Übernahme aller Katalogdaten in eine Datenbank nicht das Problem der Datenselektion zu lösen, im Gegenteil wäre insbesondere die Übernahme der jeweils herstellerspezifischen Ordnungsstrukturen mit einer Erschwerung der Übersichtlichkeit verbunden, abgesehen davon, dass die unterschiedlichen Datenstrukturen nicht ohne weiteres technisch in einer Datenbank zu handhaben wären.

Es hat sich gezeigt, dass bei der bekannten Vorgehensweise letztlich die technische Zeichnung und Planungsunterlagen nur sehr langsam erstellt werden können, weil das Nachschlagen der Artikelnummern mit einem gewissen Zeitaufwand verbunden ist, was insbesondere deswegen unangenehm ist, weil die Planung der Küche in der heutigen Zeit unmittelbar während des Kundengespräches erfolgt und dieses deshalb entsprechend zeitaufwändig ist.

Die Aufgabe der vorliegenden Erfindung besteht folglich darin, ein computerimplementiertes Verfahren dahingehend zu verbessern, dass der Zeitbedarf für das Planen der Küche maßgeblich verringert werden kann, wobei insbesondere die Möglichkeiten der computergestützten schnellen Datenselektion besser ausgeschöpft werden sollen.

Erfindungsgemäß wird die Aufgabe durch ein Verfahren der eingangs beschriebenen Art gelöst, bei welchem die Datensätze von Holzelementen der Küchenelemente um die Eigenschaften Planungsebene und Rastermaß ergänzt werden, in einer ersten Filterebene die Datensätze von Holzelementen nach einer gewählten Planungsebene und einem gewählten Rastermaß vorselektiert werden und zutreffende Datensätze als Artikelliste zur Selektion durch den Benutzer angezeigt werden.

Durch die erfindungsgemäße Lösung wird der effizientere Einsatz des Computers dadurch ermöglicht, dass die Datensätze der einzelnen Elemente einheitlich um die technischen Daten Planungsebene und Rastermaß ergänzt werden. Dadurch können die technischen Hilfsmittel einer elektronischen Datenbank, nämlich der Einsatz bestimmter Filterebenen, erheblich wirkungsvoller als bisher zum Einsatz kommen. Es hat sich nämlich gezeigt, dass abweichend von der Vorgehensweise beim Nachschlagen von Artikelnummern in Katalogen durch Anwenden eines zunächst nur auf die Planungsebene (z. B. Unterschrank) und das Rastermaß (z. B. Grundhöhe) angewendeten Filters die Zahl der infrage kommenden Datensätze bereits so weit reduziert werden kann, dass der Benutzer den gewünschten Artikel mit seiner Nummer rasch in einer Liste auffinden und durch Anklicken in die technische Zeichnung implementieren kann. Eine derartige Vorselektion der Artikelnummern wird überhaupt erst durch den Einsatz eines Computers im Rahmen des Erstellens der Zeichnungsunterlagen ermöglicht, da ein primär nach Planungsebene und Rastermaß geordnetes Katalogsystem einzelne Artikel mehrfach redundant in Druckform aufweisen müsste und entsprechend der Umfang des Katalogvorrates in einem nicht mehr zu handhabenden Umfang zunehmen würde. Die unterschiedlichen Ordnungsstrukturen der Katalogeje nach Hersteller spielen gleichsam keine Rolle mehr. Die Holzelemente umfassen Schränke und Regale jeglicher Art sowie weitere Elemente, die den Grundaufbau der Küche darstellen und in aller Regel aus Holz gefertigt sind. Sie sollen hier aber ausdrücklich auch Elemente aus anderen Werkstoffen umfassen, wie z. B. Kunststoff, Metall oder auch Stein, die beim Küchenausbau zum Einsatz kommen.

Erleichtert werden kann das unmittelbare Auffinden der in der Artikelliste aufgeführten Küchenelemente mit ihren Datensätzen für den Benutzer vorzugsweise dadurch, dass jeweils die zugehörige Artikelbezeichnung und auch die Artikelcharakteristik dargestellt werden, d. h. erst im rechnerisch ermittelten Suchergebnis taucht das Suchkriterium auf, das bei der Selektion mit Hilfe von Papierkatalogen die Ausgangsgröße dargestellt hätte.

Um die Zahl der in der Artikelliste aufgeführten Datensätze von Küchenelementen weiter zu reduzieren und damit den Zugriff auf einen bestimmten Artikel zu erleichtern, ist in bevorzugter Weiterbildung des Verfahrens vorgesehen, dass mittels einer zweiten Filterebene die Datensätze weiterhin nach einem gewählten Funktionstyp des einzugebenden Holzelements für die technische Zeichnung selektiert werden. Funktionstyp meint, um welche grundsätzliche Art von Holzelement es sich handelt, d. h. um ein Aufbewahrungselement, wie z. B. einen Schrank, ein Element aus dem Bereich Spülen, ein Küchenelement aus dem Bereich Kochen, ein Küchenelement aus dem Bereich Kühlen, ein Regal oder ein sonstiges Element, wie z. B. Blenden- und Zierteile.

Eine noch weitere Reduktion der möglicherweise immer noch in großer Anzahl in der Artikelliste vorhandenen Datensätze lässt sich mittels einer dritten Filterebene erreichen, durch welche die Datensätze nach der Selektion nach dem Funktionstyp oder alternativ ohne diesen vorherigen Selektionsschritt weiterhin nach der gewünschten Breite selektiert werden. Damit lassen sich die Datensätze in der Artikelliste in der Regel auf einige wenige überschaubare Küchenelemente reduzieren, wobei je nach Anzahl der eingesetzten Filterebene lediglich zwischen zwei bis vier Mausklicks notwendig sind, um ein Küchenelement mit seinen technischen Spezifikationen in die technische Zeichnung einzuarbeiten. Die Breiten können getrennt nach Wandelementen und Eckelementen aufgelistet sein, damit der Planer unmittelbar das richtige Element auswählen kann, ohne eine weitere Auswahl treffen zu müssen, z. B. können in einer oberen Zeile Breitenmaße von Wandelementen und in einer Zeile darunter Breiten von Eckelementen für die Selektion in der dritten Filterebene angezeigt werden. Bei der Selektion der Artikel können die Planungsgewohnheiten jedes Planers individuell berücksichtigt werden. Der Planer erhält die Auswahl der von ihm selbst am meisten eingeplanten Elemente in der Auswahlliste.

In einer bevorzugten Weiterbildung des Verfahrens ist vorgesehen, dass in einer Grundselektion zunächst ausgewählt wird, ob das einzuplanende Küchenelement ein Holzelement, eine Spüle, ein Elektroeinbaugerät oder ein sonstiges Element ist, wobei die erste Filterebene auf die Holzelemente angewendet wird, wenn diese ausgewählt werden.

Um die Bildschirmanzeige nicht zu überfrachten, ist diese Grundselektion von Vorteil, wobei der wesentliche Vorteil des erfindungsgemäßen Verfahrens nach wie vor in der vorgeschlagenen Art und Weise der Selektion der Holzelemente liegt, die den weitaus größten Anteil an den insgesamt zur Verfügung stehenden Küchenelementen haben und das Grundgerüst für jede Küche darstellen.

Während im Bereich der Elektroeinbaugeräte und sonstiger Artikel der zur Verfügung stehende Artikelstamm relativ überschaubar ist, kann es bei der Planung von Spülen von Vorteil sein, für die Spülen die Datensätze um die Eigenschaft Einbaulage zu erweitern, wobei bei der Selektion von Spülen als erste Spülenfilterebene die Einbaulage der Spüle selektiert wird.

In Anlehnung an den Auswahlprozess bei den Holzelementen wird bei der Selektion der Spülen zunächst die Einbaulage ausgewählt, wobei sich drei Alternativen darstellen, nämlich den Rand der Spüle auf der Arbeitsplatte aufliegend, bündig mit dieser abschließend oder unterhalb der Arbeitsplatte angeordnet auszubilden. Nach der Selektion dieser ersten Filterebene kann dann in gewohnter Weise eine zweite und/oder dritte Filterebene zur Anwendung kommen, die den Funktionstyp der Spüle bzw. deren Breitenmaß selektiert.

Eine weitere Vereinfachung für die endgültige Selektion eines bestimmten Datensatzes lässt sich dadurch erreichen, dass die Selektion eines bestimmten Datensatzes gespeichert wird und die nach Anwendung der wenigstens einen Filterebene in Frage kommenden Datensätze in der Reihenfolge der Anzahl ihrer vorherigen Auswahl in der Artikelliste angezeigt werden. Es hat sich in der Praxis gezeigt, dass bestimmte Küchenelemente, wie z. B. Unterschränke in üblichen Normmaßen, erheblich öfter in Küchen verwendet werden als andere, spezielle Elemente. Entsprechend tauchen solche häufig ausgewählten Küchenelemente bereits nach der Anwendung der ersten Filterebene in der Artikelliste ganz oben auf, so dass sie von dem Planer ohne die Anwendung weiterer Filterebenen unmittelbar selektiert werden können. Ebenfalls ist es möglich, dass parallel nach der Anwendung der wenigstens einen Filterebene eine z. B. alphabetisch geordnete Liste aller in Frage kommenden Datensätze und eine nach Anzahl vorheriger Aufrufe geordnete Artikelliste mit in Frage kommenden Datensätze für die endgültige Selektion angezeigt werden.

Ferner hat es sich als vorteilhaft erwiesen, nach der Übernahme eines Datensatzes in die technische Zeichnung die Filterauswahl zunächst unverändert beizubehalten. Dies trägt dem Umstand Rechnung, dass der Planer zunächst eine Planungsebene bis zum Ende plant und erst dann ein Wechsel der Planungsebene, d. h. ein Umstellen der ersten Filterebene erfolgen muss. Auch durch diese Maßnahme kann die Anzahl der insgesamt notwendigen Eingaben verringert werden.

Vorzugsweise wird neben der technischen Zeichnung auch eine dreidimensionale Ansicht der zu planenden Küche angezeigt, da dies insbesondere mit technischen Zeichnungen oft nicht vertrauten Kunden einen besseren Gesamteindruck der Küche vermittelt. Vorteilhaft ist es weiterhin, wenn eine Stück-und/oder Angebotsliste dargestellt wird, damit der Planer während der Planung auch bei den Kosten die Übersicht behält.

Da sich die Kunden vor Beginn der Planung in der Regel bereits für eine bestimmte Modellserie eines bestimmten Herstellers entschieden haben, ist es weiterhin vorteilhaft, wenn vor der Anwendung der ersten Filterebene eine Vorselektion der Datensätze nach Hersteller und ggf. Modellreihe durchgeführt wird. Nicht benötigte Datensätze werden daher bereits im Vorfeld ausgeschlossen und können nicht mehr dazu führen, dass die für die Selektion einzelner Küchenelemente generierten Artikellisten übermäßig lang werden.

Bevorzugt ist eine Ausführungsform, bei welcher alle zur Anwendung kommenden Filterebenen und die Artikelliste simultan angezeigt und durch ein grafisches Bedienelement, wie z. B. eine Maus, unmittelbar auswählbar sind.

Durch diese Art der Darstellung kann der Planer unmittelbar dann die Anwendung weiterer Filterebenen beschließen, wenn ihm die angezeigte Artikelliste zu groß erscheint und er den gewünschten Artikel dort noch nicht wiederfinden kann.

Vorzugsweise wird in der ersten Filterebene eine schematische Küchenzeile in den verfügbaren Rastermaßen angezeigt, wobei die Filtereinstellungen durch einfaches einmaliges Anklicken des entsprechenden Bildelementes selektiert werden.

Beispielsweise kann eine Küchenzeile schematisch in C-Form oder umgekehrter C-Form dargestellt werden, wobei der senkrechte Schenkel Hochschränke, der untere waagrechte Schenkel Unterschränke und der obere waagrechte Schenkel Hängeschränke symbolisiert, die jeweils in verschiedene Höhenmaße zur Veranschaulichung des Rastermaßes untergliedert sind. Eine farbliche Abstufung der einzelnen Planungsebenen erleichtert weiterhin den Zugriff.

Gegenstand der vorliegenden Erfindung ist auch ein Computer, bei welchem ein Verfahren der zuvor beschriebenen Art in Programmform hinterlegt ist und welcher einen Datenspeicher mit Datensätzen zur Planung bereitstehender Küchenelemente, einen Bildschirm zum Anzeigen der technischen Zeichnung, relevanter Filterebenen und Artikellisten sowie ein grafisches Bedienelement für die Eingabe aufweist.

Nachfolgend wird anhand der beigefügten Darstellungen von Bildschirmanzeigen näher auf ein Ausführungsbeispiel der Erfindung eingegangen. Es zeigen:
- Fig. 1: eine Abbildung eines Bildschirms bei der Anwendung des computerimplementier- ten Verfahrens zur Küchenplanung;
- Fig. 2: einen vergrößerten Ausschnitt der Bild- schirmmaske nach Fig. 1 für die Auswahl von Holzelementen;
- Fig. 3: ein vergrößerter Ausschnitt der Bild- schirmmaske für die Auswahl von Spülen;
- Fig. 4: ein Selektionsfeld für die Auswahl von Elektrogeräten.

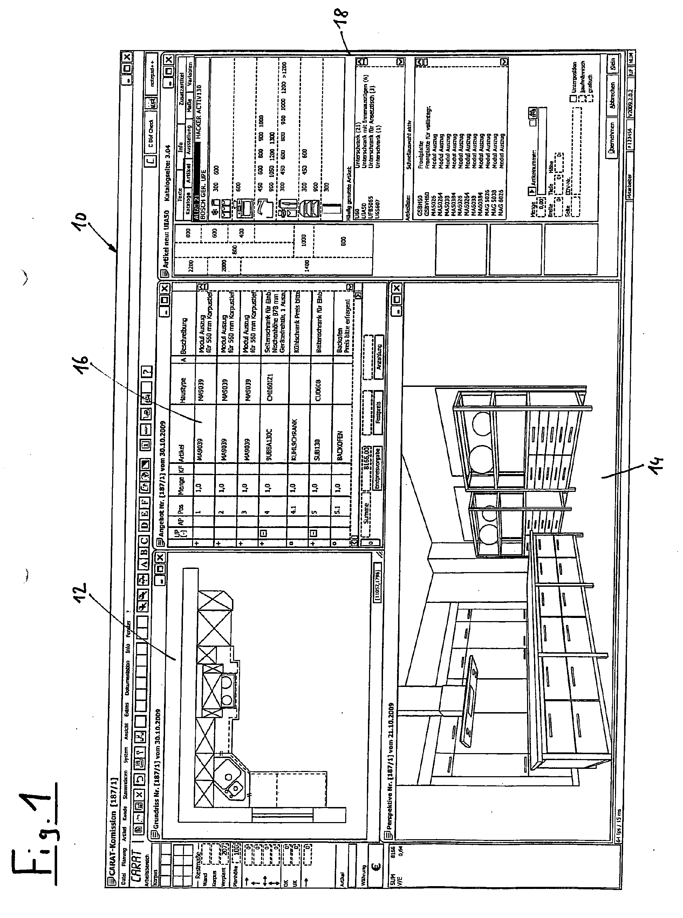

In Fig. 1 ist eine typische Bildschirmmaske 10, wie sie Nutzern von Computern mit grafischer Benutzeroberfläche vertraut ist, dargestellt. Das zugrundeliegende Programm verkörpert ein computerimplementiertes Verfahren zum Erstellen einer technischen Zeichnung 12 für die Küchenplanung, wobei die technische Zeichnung 12 beispielhaft hier im oberen linken Bereich des Bildschirmes dargestellt ist. Unterhalb der technischen Zeichnung 12 ist eine dreidimensionale Darstellung 14 der Küche vorgesehen, während rechts neben der technischen Zeichnung eine Angebotsliste 16 dargestellt ist. In dieser Angebotsliste 16 tauchen die Artikel mit ihren Artikelnummern auf, wobei jedem Artikel die für die technische Zeichnung relevanten technischen Daten, nämlich insbesondere die Grundmaße, zugeordnet sind, so dass sie entsprechend automatisch von dem Programm in die technische Zeichnung implementiert werden können.

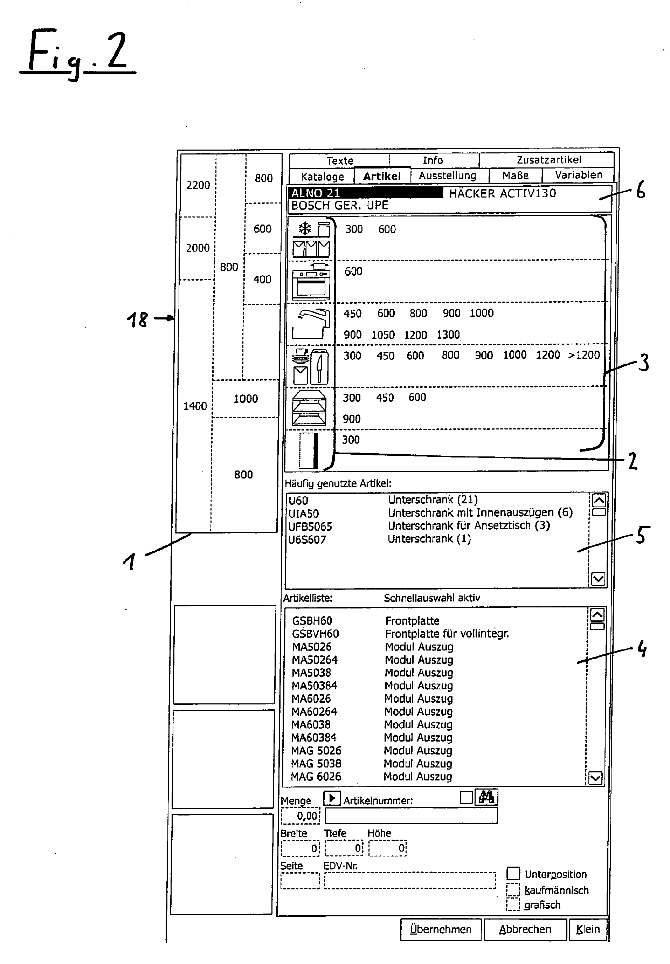

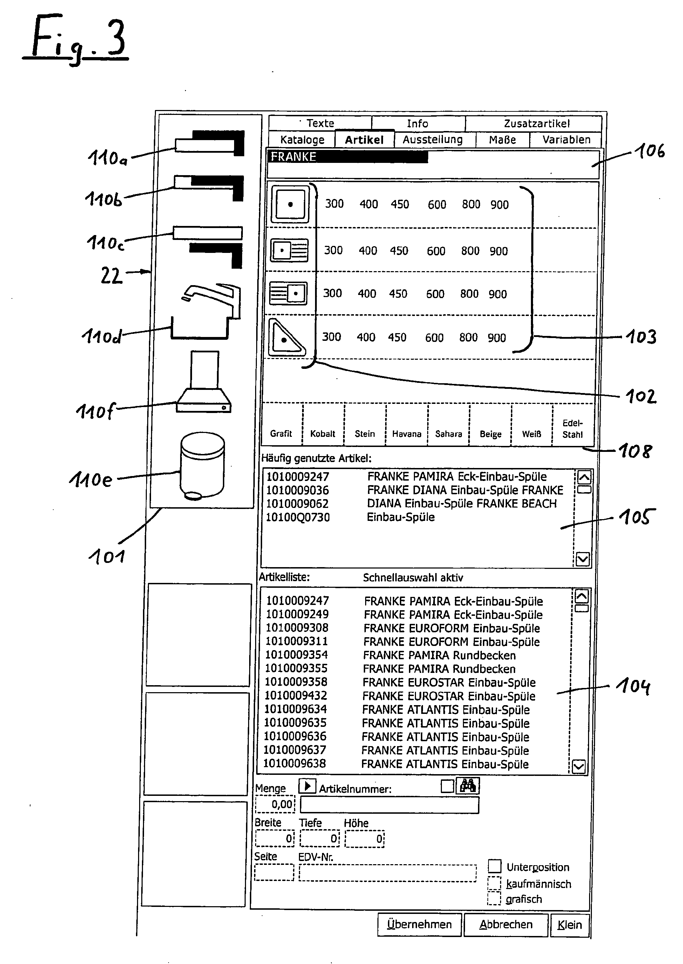

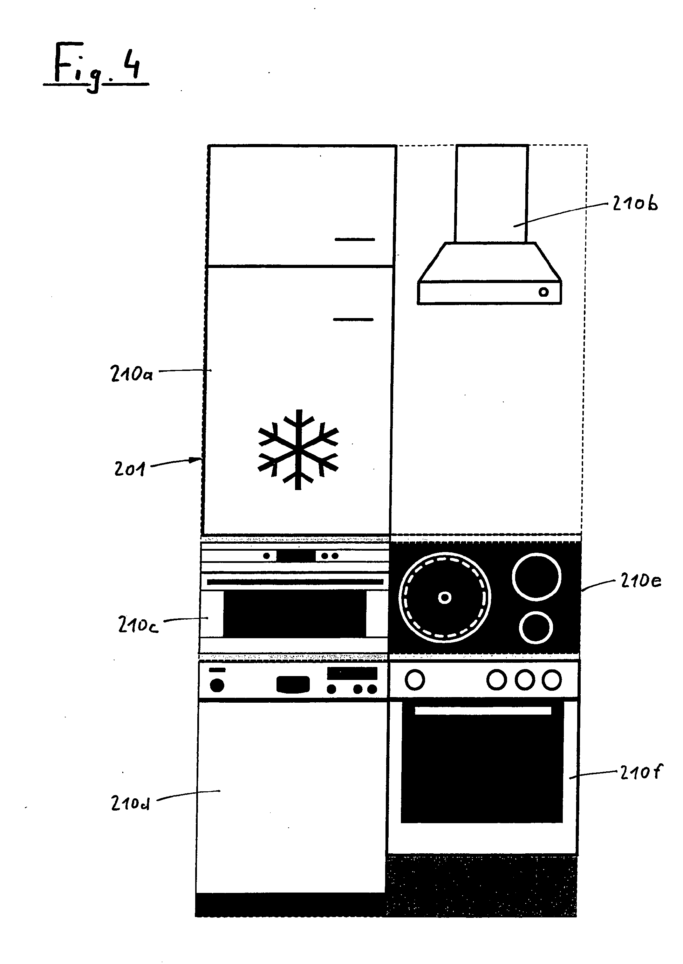

Nicht auf dem Bildschirm erkennbar ist, dass sämtliche zur Verfügung stehenden Küchenelemente mit ihrer Artikelnummer und ihren wesentlichen Eigenschaften in einem Datenspeicher hinterlegt sind, auf die Zugriff z. B. durch eine auf der rechten Seite der Darstellung gemäß Fig. 1 angezeigte Filtermaske ermöglicht ist. Diese Filtermaske 18 für Holzelemente ist in Fig. 2 vergrößert dargestellt. Fig. 3 zeigt eine Filtermaske 20 für Spülen, Fig. 4 ein Selektionsfeld 22 für Elektrogeräte. Am komplexesten stellt sich dabei die Planung von Holzelementen dar.

Die Filtermaske 18 gemäß Fig. 2 umfasst fünf grafisch dargestellte, für die Artikelauswahl relevante Bereiche. Bereich 1 kennzeichnet eine erste Filterebene, mit welcher eine Vorselektion, in diesem Fall der Holzelemente, nach Planungsebene und Rastermaß ermöglicht wird. Die grafische Darstellung der Filterebene 1 erfolgt schematisch in Anlehnung an eine vereinfachte Küchenzeile in C-Form, wobei auf der linken Seite durchgängig die Hochschränke in ihren unterschiedlichen Rastermaßen, rechts unten die Unterschränke in ihren zur Verfügung stehenden Rastermaßen, unmittelbar darüber die Aufsetzschränke in ihren zur Verfügung stehenden Rastermaßen und rechts oben die Hängeschränke in ihren zur Verfügung stehenden Rastermaßen symbolisiert sind. Durch einfaches Anklicken eines bestimmten Bereiches kann der Planer damit unmittelbar die Filterebene 1 nach Planungsebene und Rastermaß einstellen. Im dargestellten Beispielsfall ergeben sich die Darstellungen in den Bereichen 2 bis 5 durch Anklicken des Bereiches der Filterebene 1.

In der Filterebene 2, die sich rechts oben an die Filterebene 1 anschließt, sind durch Piktogramme Funktionstypen von Küchenelementen vorgegeben, durch deren Anklicken mit Hilfe des grafischen Bedienelements eine weitere Selektion vorgenommen werden kann. Im Beispielsfall sind dies von oben die Funktionstypen Kühlen, Kochen, Spülen, Aufbewahren, Regal und Blenden- und Zierteile. Im dargestellten Beispielsfall ist allerdings keine der Kategorien vorausgewählt worden.

Rechts neben der Filterebene 2 schließt sich die Filterebene 3 an, die die in den einzelnen Funktionsbereichen zur Verfügung stehenden Elementbreiten angibt. Möchte der Planer beispielsweise gerade eine Spüle planen, die eine Breite von 1.000 mm haben soll, kann er nach dem Klicken auf den hier veranschaulichten Bereich der Filterebene 1 unmittelbar durch Klicken auf die Breite in der Filterebene 2 zu einer sehr stark selektierten Artikelliste 4 gelangen, unter denen sich höchstwahrscheinlich bereits das gewünschte Küchenelement befindet.

Wie bereits erwähnt, ist eine solche Filterung im Beispielsfall nicht vorgenommen worden, um den Aufbau der Artikellisten 4 und 5 näher zu erläutern. Wie im Feld 6 zu erkennen ist, ist allerdings vorab bereits eine Beschränkung auf einen einzelnen Hersteller vorgenommen worden, was aber nicht immer der Fall sein muss.

Im Bereich 4 sind sämtliche Artikel dargestellt, die der gewählten Planungsebene in Verbindung mit dem gewählten Rastermaß entsprechend der Position des Bezugszeichens 1 entspricht. Es ist zu beachten, dass im Beispielfall auch bereits eine Vorselektion nach Hersteller und Modellreihe erfolgt ist, grundsätzlich wäre es aber auch denkbar, herstellerübergreifende oder modellreihenübergreifende Suchen durchzuführen.

Wie zu ersehen ist, ist die Artikelliste 4 sehr lang und beschränkt sich nicht auf die am Bildschirm ablesbaren Artikel, sondern umfasst noch ein Vielfaches der explizit dargestellten Einzelelemente. Um in einem solchen Beispielsfall dem Planer bereits Zugriff auf ein möglicherweise gewünschtes Küchenelement zu ermöglichen, ist unter 5 eine Artikelliste nach der Häufigkeit der Nutzung der betreffenden Küchenelemente angezeigt. Im Beispielfall sind lediglich vier Küchenelemente, die der Vorselektion in der Filterebene 1 entsprechen, angezeigt, wobei der häufigste Artikel bereits viermal und der unterste Artikel bereits lediglich einmal verplant worden ist. Da es wahrscheinlich ist, dass der Planer die bislang bereits am häufigsten verplanten Küchenelemente auch weiterhin am häufigsten verplant, kann er mit Hilfe der nach Häufigkeit des Aufrufens angeordneten Artikelliste 5 bereits nach Einstellung der Filterebene 1 möglicherweise einen besonders schnellen Zugriff auf einen einzelnen Artikel erhalten, wobei nach Anklicken dieser mit seinen technischen Grundabmessungen unmittelbar an der markierten Stelle in die technischen Zeichnung eingearbeitet und die Angebotsliste 16 um den betreffenden Artikel ergänzt wird. Die dreidimensionale Darstellung 14 wird selbstverständlich ebenfalls angepasst. Sofern sich der gewünschte Artikel nicht in der nach Häufigkeit geordneten Artikelliste 5 befindet, weil beispielsweise ein Kochelement eingeplant werden soll, könnte der Planer durch Anklicken des entsprechenden Piktogramms in der Filterebene 2 oder direkt der Breitenabmessung in der Filterebene 3 zu einer erheblich eingeschränkten Artikelliste 4 gelangen, die dann das gewünschte Küchenelement ausweisen würde, so dass er dann durch Anklicken den betreffenden Artikel in die technische Zeichnung 12 integrieren kann.

Wie zu ersehen ist, ist den Artikelnummern in den Listen 4 und 5 jeweils noch eine genaue Bezeichnung von Artikelgruppe und Artikelcharakteristik beigefügt, so dass auch der weniger erfahrene Benutzer, der die Artikelkürzel der Hersteller, die in der Regel nach Funktion und Abmessung aufgebaut sind, nicht zuordnen kann, eine Hilfestellung bei der Artikelauswahl erhält.

Fig. 3 zeigt eine Filtermaske 22 ähnlich der Filtermaske 18, wie sie dem Benutzer dargestellt wird, wenn er im Rahmen einer Grundselektion ausgewählt hat, als nächstes Küchenelement eine Spüle in die Planung zu integrieren. Die Filtermaske 22 gliedert sich wiederum in eine erste Filterebene 101, in welcher primär die Einbaulagen der Spülen ausgewählt werden können, eine zweite Filterebene 102, in welcher der Funktionstyp der jeweiligen Spüle dargestellt ist, sowie eine dritte Filterebene 103, in welcher die zur Verfügung stehenden Breiten der Spülen dargestellt sind. Wiederum existiert ein Anzeigefeld 106 zur Anzeige eines vorselektierten Herstellers, während ergänzend bei der Filtermaske 22 Felder 108 für eine Farbauswahl der Spülen vorhanden sind.

Im rechten Bereich sind wiederum zwei Artikellisten vorgesehen, eine erste Artikelliste 104, die sämtliche über die Filterebenen selektierten möglichen Artikel anzeigt, sowie eine Artikelliste 105, die nur die bereits vorher durch den Planer wenigstens einmal verplanten Artikel in der Reihenfolge der Anzahl ihrer Auswahl anzeigt. Zur Erläuterung der ersten Spülenfilterebene 101 sei noch darauf hingewiesen, dass die oberen drei Symbole 110a, 110b und 110c die Einbaulage der jeweiligen Spüle als erstes Selektionskriterium symbolisieren, während als übrige, dem Spülenbereich zugehörige Elemente beispielsweise noch Armaturen 110d und Mülleimer 110e sowie ggf. Sonstiges 110f durch Piktogramme symbolisiert sind, die ebenfalls im Bereich der Spülen in die Küche integriert werden.

Das oberste Symbol 110a steht für Spülen, die mit ihrem außen umlaufenden Rand oben auf der Arbeitsplatte aufliegen, während das Symbol 110b für Spülen steht, deren seitliche Ränder bündig mit der Arbeitsplatte abschließen. Das Symbol 110c schließlich steht für Spülen, die unterhalb eines entsprechenden Ausschnitts unter der Arbeitsplatte der Küche montiert werden.

Auch im Bereich von Spülen lässt sich durch die neu geschaffene erste Spülenfilterebene mit den Einbaulagen der Spüle in Bezug zur Arbeitsplatte ein erheblicher Zeitgewinn bei der Planung einer Küche erreichen.

In Fig. 4 ist schließlich noch eine erste Filterebene 201 gezeigt, wie sie sich nach einer Grundselektion darstellt, wenn ein Elektroeinbaugerät in die Küche eingeplant werden soll. Diese erste Filterebene 201 erscheint in einer Filtermaske (nicht gezeigt), die ähnlich den beiden zuvor gestellten Filtermasken aufgebaut ist, wobei sich allerdings die Artikelvielfalt bei Kücheneinbaugeräten erheblich kleiner darstellt und deswegen nur beispielhaft die erste Filterebene 201 für Elektroeinbaugeräte vorgestellt wird.

Die erste Filterebene für Elektroeinbaugeräte umfasst alle Typen von Geräten, die üblicherweise in Einbauküchen eingesetzt werden, nämlich Kühlschränke 210a, Dunstabzugshauben 210b, Mikrowellen 210c, Spülmaschinen 210d, Kochfelder 210e und Einbauherde, Herde 210f.

Mit Hilfe des vorbeschriebenen computergestützten Verfahrens können die Planungsvorgänge, insbesondere für die Holzelemente, erheblich verkürzt werden, wobei es insbesondere nicht mehr notwendig ist, Kataloge zu Rate zu ziehen, die quasi einen umgekehrten Aufbau haben, wie es der Suchablauf bei der Verwendung des computergestützten Verfahrens vorsieht. Dort sind nämlich die Artikel nach Artikelgruppen und Artikelcharakteristik, beispielsweise nach Unterschränken mit Innenauszügen, geordnet, so dass der Planer sich entsprechend rückwärts die Artikelnummer suchen muss. Umgekehrt wäre eine Katalogdarstellung nach der hier beschriebenen Vorgehensweise praktisch nicht möglich, da eine Anordnung der einzelnen Artikel in einem Katalog mit den primären Suchkriterien Planungsebene und Rastermaß zwangsläufig zu einer redundanten Darstellung von Holzelementen führen müsste, was in der Praxis nicht handhabbar wäre.

## Patentansprüche

1. Computerimplementiertes Verfahren zum Erstellen einer technischen Zeichnung (12) für die Küchenplanung, wobei zur Verfügung stehende Küchenelemente als Datensätze mit ihren Grundabmessungen in einem Datenspeicher hinterlegt werden und nach der Selektion eines Datensatzes das entsprechende Küchenelement in die technische Zeichnung eingefügt wird, **dadurch gekennzeichnet, dass** in einer ersten Filterebene (1) die Datensätze der Holzelemente nach einer gewählten Planungsebene und einem gewählten Rastermaß selektiert werden und betreffende Datensätze als Artikelliste (4) zur Selektion durch den Benutzer angezeigt werden.

2. Computerimplementiertes Verfahren nach Anspruch 1, **dadurch gekennzeichnet, dass** in der Artikelliste (4) neben dem betreffenden Datensatz jeweils die zugehörige Artikelgruppe und die Artikelcharakteristik dargestellt werden.

3. Computerimplementiertes Verfahren nach Anspruch 1, **dadurch gekennzeichnet, dass** mittels einer zweiten Filterebene (2) nach Beschränkung der Anzahl der Datensätze auf Planungsebene und Rastermaß die Datensätze weiterhin nach einem gewählten Funktionstyp des einzuplanenden Küchenelements für die technische Zeichnung (12) selektiert werden und/oder mittels einer dritten Filterebene (3) die Datensätze nach der Selektion nach dem Funktionstyp oder unmittelbar weiterhin durch die gewünschte Breite selektiert werden.

4. Computerimplementiertes Verfahren nach einem der vorhergehenden Ansprüche, **dadurch gekennzeichnet, dass** in einer Grundselektion zunächst ausgewählt wird, ob das einzuplanende Küchenelement ein Holzelement, ein Elektrogerät oder ein sonstiges Element ist, wobei die erste Filterebene auf die Holzelemente angewendet wird, wenn diese ausgewählt werden.

5. Computerimplementiertes Verfahren nach Anspruch 4, **dadurch gekennzeichnet, dass** für die Spülen die Datensätze um die Eigenschaft Einbaulage erweitert werden und bei der Selektion von Spülen als erste Spülenfilterebene die Einbaulage der Spüle selektiert wird.

6. Computerimplementertes Verfahren nach einem der vorhergehenden Ansprüche, **dadurch gekennzeichnet, dass** die Selektion eines bestimmten Datensatzes gespeichert wird und die nach Anwendung wenigstens einer Filterebene in Frage kommenden Datensätze in der Reihenfolge der Anzahl ihrer vorherigen Auswahl in der Artikelliste (4) angezeigt werden.

7. Computerimplementiertes Verfahren nach Anspruch 6, **dadurch gekennzeichnet, dass** nach der Anwendung wenigstens einer Filterebene parallel nebeneinander eine Artikelliste (4) aller in Frage kommenden Datensätze und eine Artikelliste (5) nach Anzahl vorheriger Aufrufe geordneter und in Frage kommender Datensätze für die endgültige Selektion angezeigt werden.

8. Computerimplementiertes Verfahren nach einem der vorhergehenden Ansprüche, **dadurch gekennzeichnet, dass** nach der Übernahme eines Datensatzes in die technische Zeichnung (12) die Filterauswahl zunächst unverändert beibehalten wird.

9. Computerimplementiertes Verfahren nach einem der vorhergehenden Ansprüche, **dadurch gekennzeichnet, dass** neben der technischen Zeichnung (12) eine dreidimensionale Ansicht (14) der zu planenden Küche generiert wird und/oder eine Stück- und/oder Angebotsliste (16) generiert wird.

10. Computerimplementiertes Verfahren nach einem der vorhergehenden Ansprüche, **dadurch gekennzeichnet, dass** vor der Anwendung der ersten Filterebene (1) eine Vorselektion der Datensätze nach Hersteller und/oder Modellreihe durchgeführt wird.

11. Computerimplementiertes Verfahren nach einem der Ansprüche 3 bis 10, **dadurch gekennzeichnet, dass** in der zweiten Filterebene zur Verfügung stehende Funktionstypen nach Anwendung der ersten Filterebene (1) als Piktogramme für die weitere Selektion angezeigt werden.

12. Computerimplementiertes Verfahren nach einem der vorhergehenden Ansprüche, **dadurch gekennzeichnet, dass** alle zur Anwendung kommenden Filterebenen (1, 2, 3) und Artikellisten (4, 5) simultan angezeigt werden und durch ein grafisches Bedienelement unmittelbar auswählbar sind.

13. Computerimplementiertes Verfahren nach Anspruch 12, **dadurch gekennzeichnet, dass** die technische Zeichnung (12) und/oder die Filterebenen (1, 2, 3) und/oder die dreidimensionale Darstellung (14) der Küche und/oder die Angebotsliste (16) und/oder die Artikellisten (4, 5) in einer Bildschirmmaske angezeigt werden.

14. Computerimplementiertes Verfahren nach einem der vorhergehenden Ansprüche, **dadurch gekennzeichnet, dass** für die Einstellung der ersten Filterebene eine schematische Küchenzeile in den auswählbaren Rastermaßen angezeigt wird und die Filtereinstellungen durch einfaches einmaliges Anklicken der entsprechenden Bedienelemente selektiert werden.

15. Computer, bei welchem ein Verfahren nach einem der vorhergehenden Ansprüche in Programmform hinterlegt ist, der einen Datenspeicher mit Datensätzen zur Planung bereitstehender Küchenelemente, einen Bildschirm zur Anzeige der technischen Zeichnung (12), relevante Filterebenen (1, 2, 3) und Artikellisten (4, 5) sowie ein grafisches Bedienelement für die Eingabe aufweist.
